# EUROPEAN PATENT APPLICATION

(11) **EP 2 629 392 A1**
(43) Date of publication of application: **21.08.2013**
(21) Application number: 11870830.4
(22) Date of filing: 25.11.2011
(51) Int. Cl.: H02J 7/00, H01M 10/44, H02H 7/18, H02J 7/02

(54) **STORAGE BATTERY SYSTEM**

(71) Applicant: Hitachi, Ltd., Tokyo 100-8280 (JP)
(72) Inventor: TAKEUCHI Takashi, Kokubunji-shi Tokyo 185-8601 (JP); TERADA Takahide, Kokubunji-shi Tokyo 185-8601 (JP)
(74) Representative: Beetz & Partner
(86) International application number: PCT/JP2011/077262
(87) International publication number: WO 2013/076877

(57) **Abstract**

Provided is a storage battery system capable of realizing safe operation while maintaining high charging/discharging performance. The storage battery system (100) comprises a parallel connection of a plurality of storage battery modules (1) each including a storage battery unit (2) having a plurality of unit cells and current limiting means (3) connected in series to the storage battery unit (2). The current limiting means (3) includes a semiconductor device (33, 35) and voltage application means (31, 32) which applies prescribed voltage to the semiconductor device (33, 35) and thereby limits charging/discharging current of the storage battery unit (2) via the semiconductor device (33, 35) within a limit current value corresponding to a constant-current region of the semiconductor device (33, 35).

## Description

### Technical Field

The present invention relates to a storage battery system comprising a plurality of storage battery units connected in parallel.

### Background Art

Photovoltaic power generation systems, wind power generation systems, etc. are being introduced in recent years from the viewpoints of global warming gas reduction and energy saving. For the storage and efficient use of the electric power generated by the power generation, introduction of a large-scale storage battery system into an electric power system is now under consideration. Being supposed to be used for a long period in a variety of environments, the large-scale storage battery systems are required to maintain high reliability even in use under severe environmental conditions.

Thus, with consideration given to the handling, transportation, management, etc. of each unit cell, a plurality of unit cells are connected together in series or in parallel to form a storage battery unit and then a large-scale storage battery system is constructed by arranging and connecting the small/middle-scale storage battery units in series or in parallel. Incidentally, parallel connection of series-connected cell units is considered to be desirable in order to prevent excessive current from flowing when a short circuit has occurred for some reason.

When such a configuration is employed, variations in the voltage and/or battery capacity can occur among the storage battery units depending on the manufacturing variations and the temporal change of the unit cells. In such cases, in the storage battery system formed by connecting a plurality of storage battery units in parallel, the charging/discharging currents flowing in the storage battery units do not become uniform and the chargeable/dischargeable amount of electricity (chargeable/dischargeable electric energy) of the whole storage battery system can drop significantly.

For example, Patent Literature 1 has described a combined battery system (storage battery system) comprising a plurality of battery units (storage battery units) connected in parallel and a current control element for limiting electric current flowing out from each battery unit. The control means controls the level of a signal sent to the current control element based on the electric current flowing through each battery unit or the like.
The Patent Literature 1 has also described implementation of the current control element by use of a discrete element in which the value of the electric current flowing through the element (current limiting element) changes in response to the current control signal inputted from the control means.

### Prior Art Literature

### Patent Literature

Patent Literature 1: JP-2010-29015-A

### Summary of the Invention

### Problem to be Solved by the Invention

In the combined battery system described in the Patent Literature 1, however, the control means controls the charging/discharging current of each battery unit by outputting the current control signal to the current control element according to the electric current flowing through the battery unit or the like. Thus, the combined battery system has to be equipped with detection means for detecting the electric current flowing through the current limiting element or the like and the control means for executing control according to the detected value inputted from the detection means.
Therefore, the combined battery system described in the Patent Literature 1 involves problems in that that the circuitry becomes complex and the number of components is necessitated to increase.

The object of the present invention, which has been made in consideration of the above situation, is to provide a storage battery system capable of realizing safe operation while maintaining high charging/discharging performance.

### Means for Solving the Problem

To achieve the above object, a storage battery system in accordance with the present invention comprises a parallel connection of a plurality of storage battery modules each including a storage battery unit having a plurality of unit cells and current limiting means connected in series to the storage battery unit. The current limiting means includes: a semiconductor device; and voltage application means which applies prescribed voltage to the semiconductor device and thereby limits charging/discharging current of the storage battery unit via the semiconductor device within a limit current value corresponding to a constant-current region of the semiconductor device.

### Effect of the Invention

According to the present invention, a storage battery system realizing safe operation while maintaining high charging/discharging performance can be provided.

### Brief Description of the Drawings

Fig. 1 is a schematic circuit configuration diagram of a storage battery system in accordance with a first embodiment of the present invention.
Fig. 2 is a circuit configuration diagram of a current limiting device included in the storage battery system.
Fig. 3 is a characteristic diagram showing the relationship between the drain-source voltage V_{DS} and the drain current I_{DS} of an FET.
Fig. 4 is a circuit configuration diagram of the storage battery system.
Fig. 5 is a circuit configuration diagram of a current limiting device installed in a storage battery system in accordance with a second embodiment of the present invention.
Fig. 6 is a circuit configuration diagram of a current limiting device installed in a storage battery system in accordance with a third embodiment of the present invention.
Fig. 7 is a circuit configuration diagram of a storage battery system in accordance with a fourth embodiment of the present invention.
Fig. 8 is a circuit configuration diagram of a storage battery system in accordance with a fifth embodiment of the present invention.
Fig. 9 is a circuit configuration diagram of a storage battery system in accordance with a sixth embodiment of the present invention.
Fig. 10 is a flow chart showing the flow of monitoring control executed by the storage battery system in accordance with the sixth embodiment of the present invention.
Fig. 11 is a circuit configuration diagram of a storage battery system in accordance with a seventh embodiment of the present invention.
Fig. 12 is a circuit configuration diagram of a storage battery system in accordance with an eighth embodiment of the present invention.

### Mode for Carrying out the Invention

In the following, embodiments in accordance with the present invention will be described in detail while properly referring to figures, wherein each component common to multiple figures is assigned the same reference character and repeated explanation thereof is omitted for brevity.

### <<First Embodiment>>

### <Configuration of Storage Battery System>

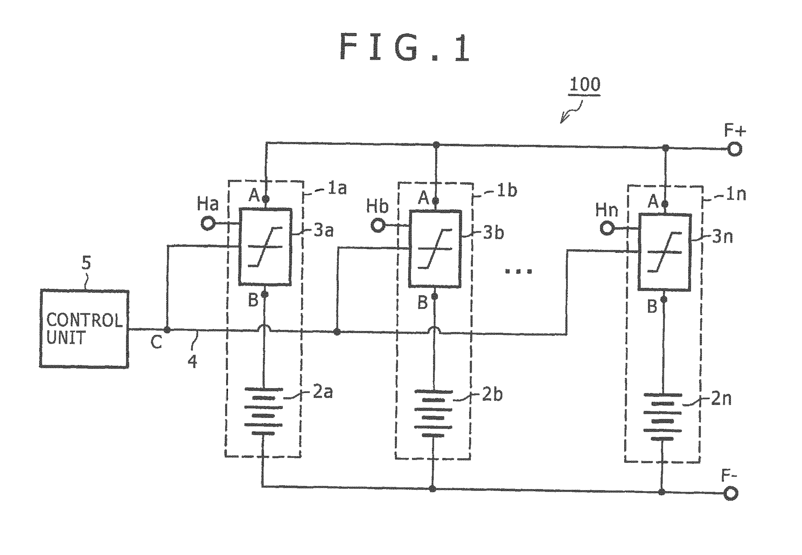

Fig. 1 is a schematic circuit configuration diagram of the storage battery system. As shown in Fig. 1, the storage battery system 100 comprises storage battery modules 1a, 1b, ···, 1n and a control unit 5.
The storage battery modules 1a, 1b, ···, 1n are connected in parallel with one another.

The storage battery module 1a includes a current limiting device 3a and a storage battery unit 2a having a plurality of unit cells connected in series. The positive electrode of the storage battery unit 2a is connected to a terminal B of the storage battery unit 2a. The other storage battery modules 1b, ···, In are also configured similarly to the storage battery module 1a.

The current limiting devices 3a, 3b, ···, 3n of the storage battery modules 1a, 1b, ···, 1n are connected to the control unit 5 via common wiring 4.
The control unit 5 includes electronic circuits (unshown) such as a CPU, a ROM, a RAM and various types of interfaces. The control unit 5 outputs an ON signal or an OFF signal to each current limiting device 3a, 3b, ···, 3n. In normal operation, for example, the control unit 5 outputs the ON signal to all the current limiting devices 3a, 3b, ···, 3n. For replacement or maintenance of storage batteries, the control unit 5 outputs the OFF signal to each current limiting device.
Terminals A of the current limiting devices 3a, 3b, ··, 3n are connected to a positive terminal F+, while negative electrodes of the storage battery units 2a, 2b, ·· ., 2n are connected to a negative terminal F-. To the positive terminal F+ and the negative terminal F-, an external load (unshown) is connected.

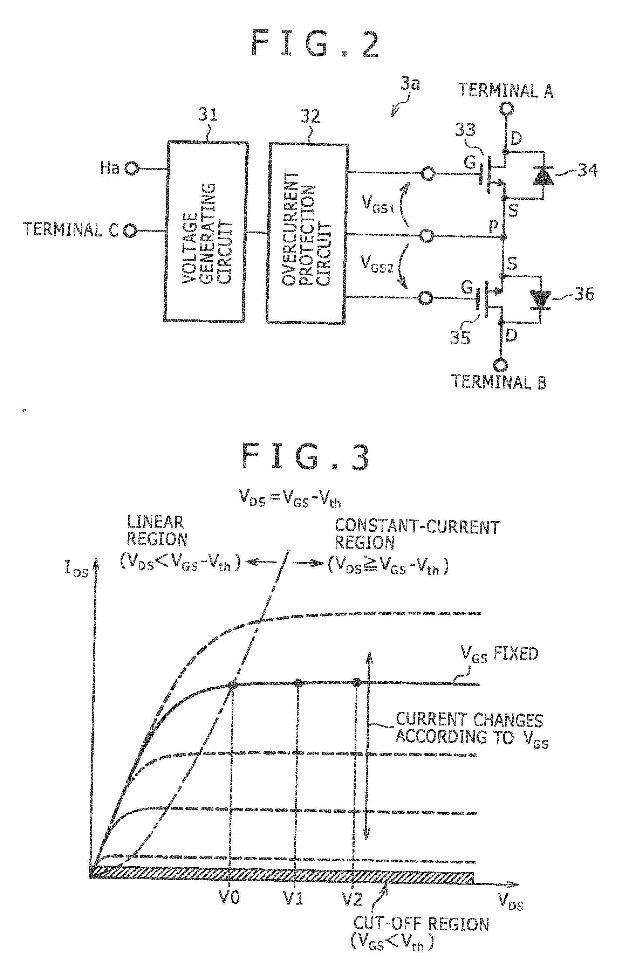

Fig. 2 is a circuit configuration diagram of the current limiting device shown in Fig. 1. The terminals A, B and C shown in Fig. 2 correspond to the terminals A, B and C shown in Fig. 1.
The current limiting device 3a (see Fig. 1) includes a voltage generating circuit 31, an overcurrent protection circuit 32, FETs (Field Effect Transistors) 33 and 35, and diodes 34 and 36.

The voltage generating circuit 31 converts power supply voltage supplied from a terminal Ha into a prescribed voltage which has been set previously, applies a voltage V_{GS1} between the gate and source of the FET 33 via the overcurrent protection circuit 32, and applies a voltage V_{GS2} between the gate and source of the FET 35 via the overcurrent protection circuit 32. To the terminal C connected to the voltage generating circuit 31, the ON signal or the OFF signal from the control unit 5 (see Fig. 3) is inputted.
The details of the voltage generating circuit 31 will be explained later.

The overcurrent protection circuit 32 is a circuit for preventing overcurrent from flowing through the FETs 33 and 35. The details of the overcurrent protection circuit 32 will be explained later.
As shown in Fig. 2, the FET 33 and the diode 34 are connected in antiparallel connection to form an antiparallel device unit. Similarly, the FET 35 and the diode 36 are connected in antiparallel connection to form an antiparallel device unit.

The two antiparallel device units are connected in series in inverse directions. The "connected in series in inverse directions" means a state in which the sources of the FETs 33 and 35 are connected together.
The gates of the FETs 33 and 35 are connected to the overcurrent protection circuit 32. The sources of the FETs 33 and 35 are also connected to the overcurrent protection circuit 32 via their intermediate point P and common wiring.

Incidentally, the voltage generating circuit 31 has been configured to set the gate voltages V_{GS1} and V_{GS2} at substantially 0 when the OFF signal is inputted from the control unit 5. In this case, the FETs 33 and 35 turn OFF and the charging/discharging current of the storage battery unit 2a (see Fig. 1) is blocked.
While the above explanation has been given of the current limiting device 3a (see Fig. 1), the current limiting devices 3b, ···, 3n are also configured similarly.

Fig. 3 is a characteristic diagram showing the relationship between the drain-source voltage V_{DS} and the drain current I_{DS} of an FET. In the characteristic diagram of Fig. 3, the horizontal axis represents the drain-source voltage V_{DS} and the vertical axis represents the drain current I_{DS}.
As shown in Fig. 3, let Vₜₕ represent the threshold voltage between the gate and the source when the FET starts transmitting (letting through) electric current, the range in which V_{DS} < V_{GS} - Vₜₕ holds is a linear region in which the drain-source voltage V_{DS} and the drain current I_{DS} are in a substantially linear relationship. In contrast, the range in which V_{DS} ≥ V_{GS} - Vₜₕ holds is a constant-current region in which the drain-source voltage V_{DS} remains substantially constant even if the drain-source voltage V_{DS} changes.

When the gate voltage V_{GS} is changed, the drain current I_{DS} changes as indicated by the vertical arrow in Fig. 3. Specifically, the drain current I_{DS} increases with the increase in the gate voltage V_{GS} and decreases with the decrease in the gate voltage V_{GS}.
Thus, when the FET is operated in the constant-current region, the drain current I_{DS} hardly changes with the change in the drain-source voltage V_{DS} as long as the gate voltage V_{GS} is constant.
Incidentally, when the gate voltage V_{GS} is in a range satisfying V_{GS} < Vₜₕ, the operating point of the FET stays in a cut-off region (weak inversion region) and thus the drain current I_{DS} hardly flows.

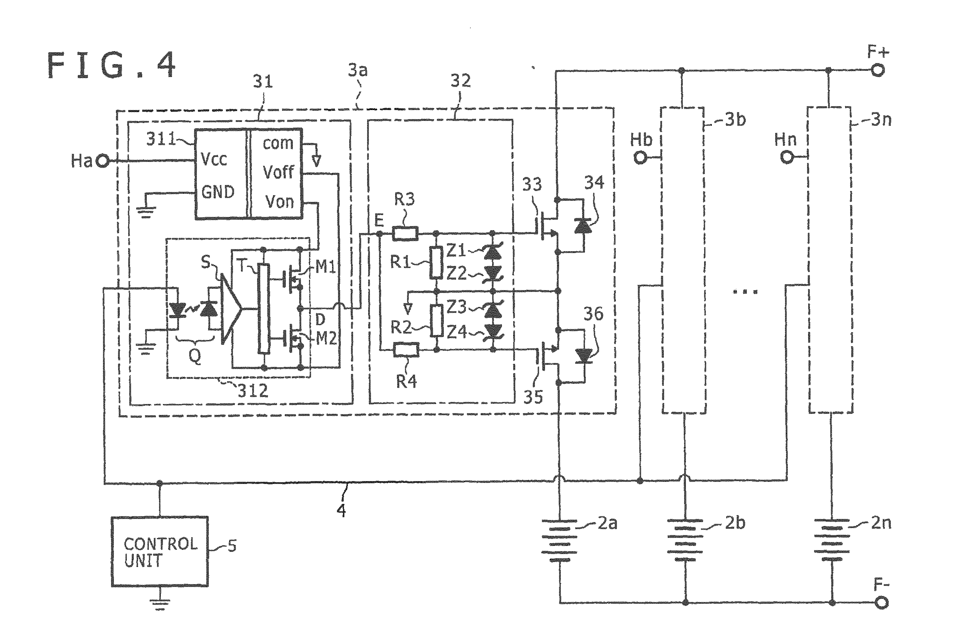

Fig. 4 is a circuit configuration diagram of the storage battery system. The voltage generating circuit 31 and the overcurrent protection circuit 32 will be explained in detail here since the storage battery units 2a, 2b, ···, 2n, the FETs 33 and 35, the diodes 34 and 36 and the control unit 5 have already been explained referring to Fig. 1 and 2.
In the following description, the storage battery units 2a, 2b, ···, 2n can be referred to as "storage battery units 2" when they are called generically (ditto for the current limiting devices 3a, 3b, ···, 3n, etc.).

The voltage generating circuit 31 includes a DC/DC converter 311 and a photocoupler IC 312.
The DC/DC converter 311 converts the power supply voltage Vcc supplied via the power supply terminal Ha into a prescribed voltage and supplies the prescribed voltage from its output terminals Voff or Von to the photocoupler IC 312. An internal common terminal "com" is connected to the sources of the FETs 33 and 35. The output terminal Voff is a terminal for outputting the prescribed voltage when the FETs 33 and 35 should be blocked. The output terminal Von is a terminal for outputting the prescribed voltage when the FETs 33 and 35 should be operated in the constant-current region.

The photocoupler IC 312 includes a photocoupler Q, an amplification circuit S, a bias voltage generating circuit T, and MOSFETs (Metal-Oxide-Semiconductor Field-Effect Transistors) M1 and M2.
The photocoupler Q converts an inputted electric signal into light and transmits the signal by electrically connecting a photoreceptor device (unshown) with the light. The electric signal is inputted from the control unit 5 via the wiring 4.
The amplification circuit S amplifies electric current inputted from the photocoupler Q and outputs the amplified current to the bias voltage generating circuit T. The bias voltage generating circuit T generates bias voltage for letting the MOSFETs (M1, M2) operate properly. The MOSFETs (M1, M2) set an output terminal D at prescribed electric potential according to the voltage inputted from the bias voltage generating circuit T.

In short, the voltage generating circuit 31 applies prescribed voltages corresponding to the ON/OFF signal (inputted from the control unit 5) to the FETs 33 and 35 via the overcurrent protection circuit 32.
Specifically, when the ON signal is continuously inputted from the control unit 5, the voltage generating circuit 31 applies substantially identical gate voltages V_{GS1} and V_{GS2} (e.g., V1 (see Fig. 3)) to the FETs 33 and 35, respectively.

When the gate voltages V_{GS1} and V_{GS2} are higher than the threshold voltage Vₜₕ (see Fig. 3) of the FET 33 and 35, charging current flows from an external load (unshown) to the storage battery unit 2a, or discharging current flows from the storage battery unit 2a to the external load.
Specifically, the charging current flows in from the external load (unshown) to the storage battery unit 2a via the terminal A, the FET 33, the diode 36 and the terminal B, or the discharging current flows out from the storage battery unit 2a to the external load (unshown) via the terminal B, the FET 35, the diode 34 and the terminal A.

The overcurrent protection circuit 32 includes Zener diodes Z1, Z2, Z3 and Z4 and resistors R1, R2, R3 and R4.
The Zener diodes Z1 and Z2 are connected in series in inverse directions. The resistor R3 is connected to the gate of the FET 33 at one end and to the output terminal D of the voltage generating circuit 31 at the other end. The resistor R1 is connected in parallel with the Zener diodes Z1 and Z2 between the gate and source of the FET 33, and also connected to the aforementioned one end of the resistor R3.
The Zener diodes Z3 and Z4 and the resistors R2 and R4 (for protecting the FET 35) are connected similarly to the connection explained above.

The Zener diodes Z1 and Z2 are used for preventing excessive charging/discharging current from flowing into the FET 33. The Zener diodes Z3 and Z4 are used for preventing excessive charging/discharging current from flowing into the FET 35.
The resistors R1 and R3 are used for applying appropriate voltage between the gate and source of the FET 33 by partitioning the voltage of the output terminal D with reference to the internal common terminal "com" of the voltage generating circuit 31. Similarly, the resistors R2 and R4 are used for applying appropriate voltage between the gate and source of the FET 35.
The resistors R3 and R4 are connected to the output terminal D of the voltage generating circuit 31 via a common connection point E.

While the voltage generating circuit 31 and the overcurrent protection circuit 32 of the current limiting device 3a have been explained above, the current limiting devices 3b, ···, 3n are also configured similarly.
The wiring 4 connecting the photocoupler IC 312 to the control unit 5 is common to the current limiting devices 3.
The current limiting devices 3b, ···, 3n are also configured similarly to the current limiting device 3a.

### <Action and Effect 1>

### (1. When ON Signal is Inputted from Control Unit)

When the ON signal is inputted from the control unit 5, the DC/DC converter 311 of the current limiting device 3 outputs a voltage corresponding to the ON signal from its output terminal Von to the photocoupler IC 312.
The photocoupler IC sets the terminal D at prescribed electric potential depending on the value of the ON signal inputted from the control unit 5 via the wiring 4.

Then, the voltages V_{GS1} and V_{GS2} (see Fig. 2) with reference to the electric potential of the internal common terminal "com" of the DC/DC converter 311 change to a prescribed voltage V_{ON} corresponding to the aforementioned electric potential of the terminal D. In other words, the voltage V_{ON} is applied as the gate voltages of the FETs 33 and 35.
Thus, when the ON signal is inputted from the control unit 5 to the photocoupler IC 312 in the circuit shown in Fig. 4, the drain current ID and the drain-source voltage V_{DS} of each FET 33, 35 are set in the relationship indicated by the solid line in Fig. 3, for example.
In this case, the characteristics of the FETs 33 and 35 are not in the cut-off region since the gate voltages of the FETs 33 and 35 are higher than the threshold voltage Vₜₕ.

When the voltage applied between the terminals A and B shown in Fig. 2 is low, the drain-source voltages V_{DS} of the FETs 33 and 35 are also low, and thus the FETs 33 and 35 operate in the linear region shown in Fig. 3.
In contrast, when the voltage applied between the terminals A and B shown in Fig. 2 is high, the drain-source voltages V_{DS} of the FETs 33 and 35 are also high, and thus the FETs 33 and 35 operate in the constant-current region shown in Fig. 3. In this case, the drain current I_{D} hardly changes even when the drain-source voltage V_{DS} changes from the voltage V1 to the voltage V2 shown in Fig. 3, for example.

Incidentally, the voltage generating circuit 31 has previously been set so that the voltage V_{ON} applied to the gates of the FETs 33 and 35 is higher than the threshold voltage Vₜₕ shown in Fig. 3 and the drain current I_{D} in the constant-current region equals a prescribed electric current value.
Therefore, when the ON signal is inputted to the current limiting device 3 and the drain-source voltage V_{DS} of each FET 33, 35 is at a voltage value V0 (at the boundary between the linear region and the constant-current region shown in Fig. 3) or higher, the drain current I_{D} is automatically limited by the characteristics of the FET 33, 35.

For example, when the storage battery unit 2a (see Fig. 4) is charged, electric current flows from the external load (unshown) toward the storage battery unit 2a via the FET 33 and the diode 36 as mentioned above. Since the FET 33 has the aforementioned characteristics, the charging current can be limited within a prescribed value.
On the other hand, when the storage battery unit 2a discharges electricity, electric current flows from the storage battery unit 2a toward the external load (unshown) via the FET 35 and the diode 34 as mentioned above. Since the FET 35 has the aforementioned characteristics, the discharging current can be limited within a prescribed value. Therefore, when a storage battery differing in the voltage is newly connected in parallel, for example, the inrush of high current into the storage battery 2 due to the voltage difference can be prevented.

Parenthetically, whether the storage battery unit 2a is charged or the storage battery unit 2a discharges electricity is determined by the relationship between the storage battery system 100 and the external load (unshown).
Therefore, with the storage battery system 100 in accordance with this embodiment, the charging/discharging current of the storage battery unit 2a can be automatically limited within a prescribed value by taking advantage of the characteristics of the FETs 33 and 35. The same goes for the storage battery units 2b, ···, 2n and the current limiting devices 3b, ···, 3n (see Fig. 4).

Further, the FET 33 and the diode 34 connected in antiparallel connection and the FET 35 and the diode 36 connected in antiparallel connection are connected together in series in inverse directions so that electric current can flow in both directions of the current limiting means 3. Thus, one of the FETs (FET 33 or FET 35) carries out the current limiting function depending on the charging/discharging of the storage battery unit 2.

Incidentally, when there are variations in the internal resistance or voltage among the parallel-connected storage battery units 2 due to the temporal change of the unit cells, etc., cross current occurs between the storage battery units 2. By the cross current, the voltage variations among the parallel-connected storage battery units 2 are equalized.

Suppose that the storage battery units 2 are not equipped with the current limiting devices 3 and the storage battery units 2 differ in the internal resistance, storage battery units 2 having high internal resistance do not reach the rated current since the charging/discharging current of a storage battery unit 2 having the lowest internal resistance reaches the rated current first.
In contrast, in the storage battery system 100 in accordance with this embodiment in which each storage battery unit 2 is equipped with the current limiting device 3, the voltage can be equalized among the storage battery units 2 while suppressing excessive cross current.
Consequently, the rated current can be extracted from each storage battery unit 2 and the maximum charging/discharging current can be achieved by the whole system.

Furthermore, with the storage battery system 100 in accordance with this embodiment, the voltage can be equalized among the storage battery units 2 while also limiting the charging/discharging current of each storage battery unit 2 within a prescribed value with a simple circuit configuration. Consequently, the maximum charging/discharging current of the whole storage battery system can be achieved while also realizing safe operation of the system through the protection of the storage battery units 2.

In addition, when the OFF signal is inputted from the control unit 5, a voltage V_{OFF} corresponding to the OFF signal is applied as the gate voltages of the FETs 33 and 35. The voltage generating means 31 has been set so that the voltage V_{OFF} becomes lower than the gate-source threshold voltage Vₜₕ, and thus each FET 33, 35 operates in the cut-off region indicated by the hatching in Fig. 3. In this case, the charging/discharging current of each storage battery unit 2 equals 0 since no drain current I_{D} flows into the FETs 33 and 35.
Thus, by operating the FETs 33 and 35 in the cut-off region, the electrical connection between the terminals A and B can be blocked and the charging/discharging of each storage battery unit 2 can be stopped.

### <<Second Embodiment>>

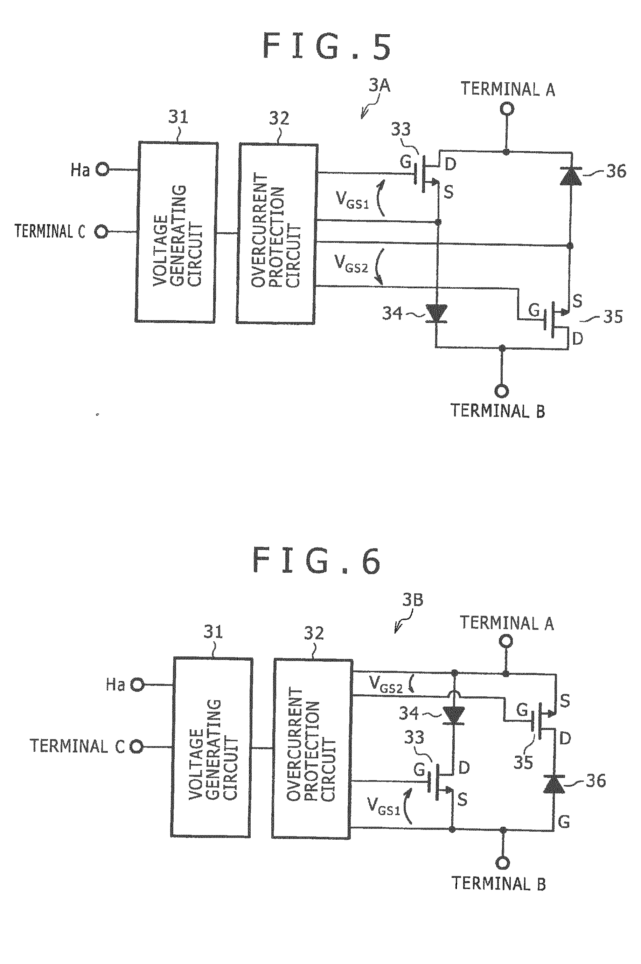

Fig. 5 is a circuit configuration diagram of a current limiting device installed in a storage battery system in accordance with a second embodiment of the present invention. The configuration of the storage battery system 100A in the second embodiment is substantially equivalent to that of the storage battery system 100 in the first embodiment except for the configuration of the current limiting device 3A.
Therefore, the following explanation will be given of the current limiting device 3A only and explanation of the other components will be omitted for brevity.

As shown in Fig. 5, the current limiting device 3A comprises a series device unit including an FET 33 and a diode 34 connected in series in forward directions and a series device unit including an FET 35 and a diode 36 connected in series in forward directions. The two series device units are connected in antiparallel connection so that electric current can flow in both directions of the current limiting device 3A.

The source of the FET 33 is connected to the anode of the diode 34, the gate of the FET 33 is connected to the output terminal D (see Fig. 4) of the voltage generating circuit 31 via the overcurrent protection circuit 32, and the drain of the FET 33 is connected to the terminal A. The cathode of the diode 34 is connected to the terminal B.
The source of the FET 35 is connected to the anode of the diode 36, the gate of the FET 33 is connected to the output terminal D (see Fig. 4) of the voltage generating circuit 31 via the overcurrent protection circuit 32, and the drain of the FET 33 is connected to the terminal B. The cathode of the diode 35 is connected to the terminal A.
Further, wiring is arranged for supplying gate voltages from the voltage generating circuit 31 to the FETs 33 and 35.

### <Effect 2>

When charging current flows into the storage battery unit 2 (see Fig. 4), the current flows toward the storage battery unit 2 via the FET 33 and the diode 34. When discharging current flows out from the storage battery unit 2, the discharging current flows toward the external load (unshown) via the FET 35 and the diode 36.
Based on the signal inputted from the control unit 5 (see Fig. 4), the voltage generating circuit 31 (see Fig. 4) applies prescribed gate voltages V_{GS1} and V_{GS2} to the gates of the FETs 33 and 35, by which the charging/discharging current flowing through each FET 33, 35 can be limited within a limit current value corresponding to the gate voltage V_{GS1}, V_{GS2}.

### <<Third Embodiment>>

Fig. 6 is a circuit configuration diagram of a current limiting device installed in a storage battery system in accordance with a third embodiment of the present invention. In the storage battery system 100B of the third embodiment, the arrangement of the FET 33 and the diode 34 differs from that in the storage battery system 100 of the second embodiment.

As shown in Fig. 6, the drain of the FET 33 is connected to the cathode of the diode 34, the gate of the FET 33 is connected to the output terminal D (see Fig. 4) of the voltage generating circuit 31 via the overcurrent protection circuit 32, and the source of the FET 33 is connected to the terminal B. The anode of the diode 34 is connected to the terminal A.
The drain of the FET 35 is connected to the cathode of the diode 36, the gate of the FET 35 is connected to the output terminal D (see Fig. 4) of the voltage generating circuit 31 via the overcurrent protection circuit 32, and the source of the FET 35 is connected to the terminal A. The anode of the diode 36 is connected to the terminal B.
Further, wiring is arranged for applying gate voltages from the voltage generating circuit 31 to the FETs 33 and 35.

### <Effect 3>

When charging current flows into the storage battery unit 2 (see Fig. 4), the current flows toward the storage battery unit 2 via the diode 34 and the FET 33. When discharging current flows out from the storage battery unit 2, the discharging current flows toward the external load (unshown) via the diode 36 and the FET 35.
Based on the signal inputted from the control unit 5 (see Fig. 4), the voltage generating circuit 31 (see Fig. 4) applies prescribed gate voltages V_{GS1} and V_{GS2} to the gates of the FETs 33 and 35, by which the charging/discharging current flowing through each FET 33, 35 can be limited within a limit current value corresponding to the gate voltage V_{GS1}, V_{GS2}.

### <<Fourth Embodiment>>

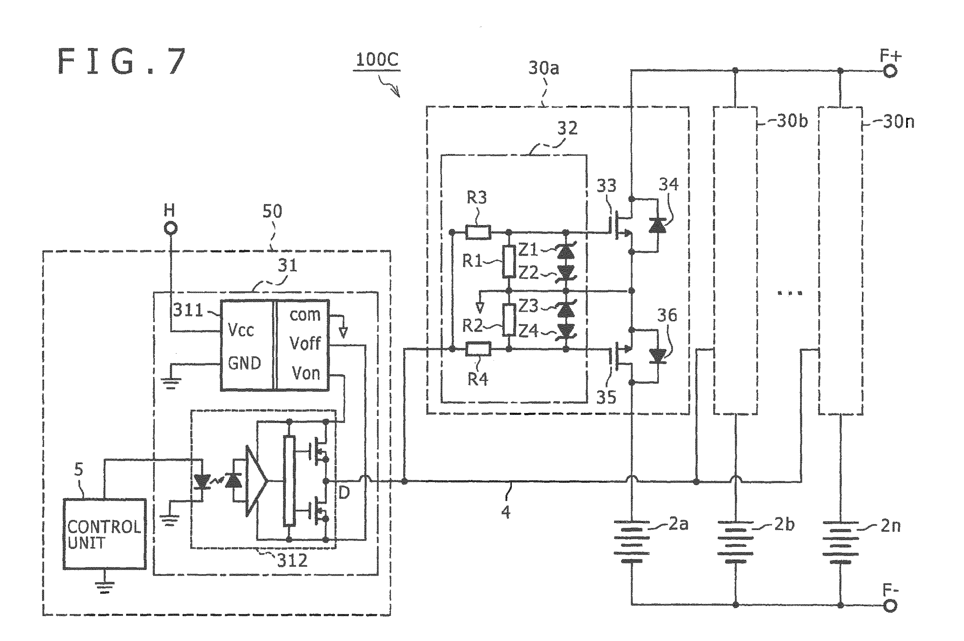

Fig. 7 is a circuit configuration diagram of a storage battery system in accordance with a fourth embodiment of the present invention. While each current limiting device 3 is equipped with the voltage generating circuit 31 (see Fig. 4) in the storage battery system 100 of the first embodiment, each current limiting device 30 (30a, ···, 30n) in the storage battery system 100C of the fourth embodiment is not equipped with the voltage generating circuit 31. Further, the storage battery system 100C of the fourth embodiment comprises a control device 50 which includes a voltage generating circuit 31 and a control unit 5.
The other configuration is equivalent to that in the first embodiment and thus repeated explanation thereof is omitted for brevity.

As shown in Fig. 7, the control device 50 comprises a control unit 5 and a voltage generating circuit 31 including a DC/DC converter 311 and a photocoupler IC 312. The output terminal D of the voltage generating circuit 31 is connected to each current limiting device 30 via wiring 4.
Each current limiting device 30 includes FETs 33 and 35, diodes 34 and 36, and an overcurrent protection circuit 32 connected to the output terminal D of the voltage generating circuit 31.
The connection relationship among the overcurrent protection circuit 32, the FETs 33 and 35, and the diodes 34 and 36 is equivalent to that in the storage battery system 100 of the first embodiment and thus repeated explanation thereof is omitted for brevity.

### <Effect 4>

According to the storage battery system 100C of this embodiment, the need of providing the voltage generating circuits 31 corresponding to the storage battery units 2 is eliminated, by which the total number of components of the storage battery system 100C can be reduced and the circuitry can be simplified. Consequently, the manufacturing cost of the storage battery system can be reduced.

### <<Fifth Embodiment>>

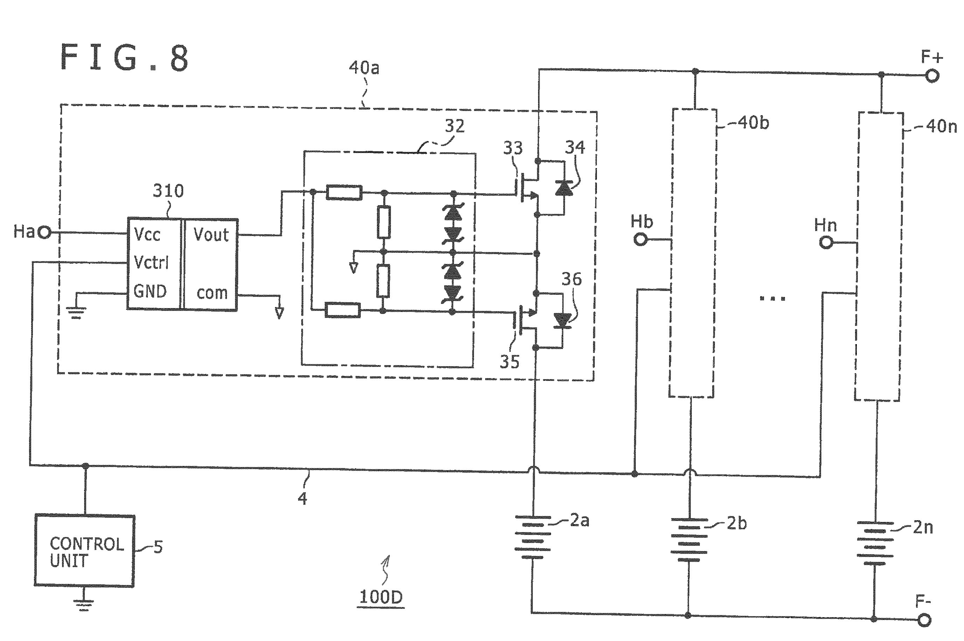

Fig. 8 is a circuit configuration diagram of a storage battery system in accordance with a fifth embodiment of the present invention. The storage battery system 100D of the fifth embodiment differs from the storage battery system 100 of the first embodiment in that the DC/DC converter has a voltage control terminal Vctrl and the control unit 5 inputs a voltage control signal to the voltage control terminal Vctrl.
The other configuration is equivalent to that in the first embodiment and thus repeated explanation thereof is omitted for brevity.

The voltage control terminal Vctrl of the DC/DC converter 310 shown in Fig. 8 is connected to the control unit 5. The DC/DC converter 310 converts the power supply voltage Vcc to a prescribed voltage corresponding to the voltage control signal inputted from the control unit 5 and outputs the prescribed voltage from its output terminal Vout to apply the prescribed voltage between the gate and source of each FET 33, 35 via the overcurrent protection circuit 32. The internal common terminal "com" of the DC/DC converter 310 is connected to the sources of the FETs 33 and 35.
The control unit 5 adjusts the input voltage of the current limiting device 40 (i.e., gate voltage of each FET 33, 34) by outputting the voltage control signal to the voltage control terminal Vctrl of the DC/DC converter 310.

### <Effect 5>

According to the storage battery system 100D of this embodiment, the limit value of the charging/discharging current flowing through each FET 33, 34 can be changed to an intended level (see Fig. 3) since the gate voltage of each FET 33, 34 changes according to the voltage control signal inputted to the voltage control terminal Vctrl from the control unit 5.
Therefore, the magnitude of the charging/discharging current can be changed depending on the status of each storage battery unit 2 such as its battery capacity and internal resistance. For example, when the battery capacity (remaining capacity) of a storage battery unit 2 is low, the charging/discharging current of the storage battery unit can be reduced by lowering the gate voltage V_{GS}.

### <<Sixth Embodiment>>

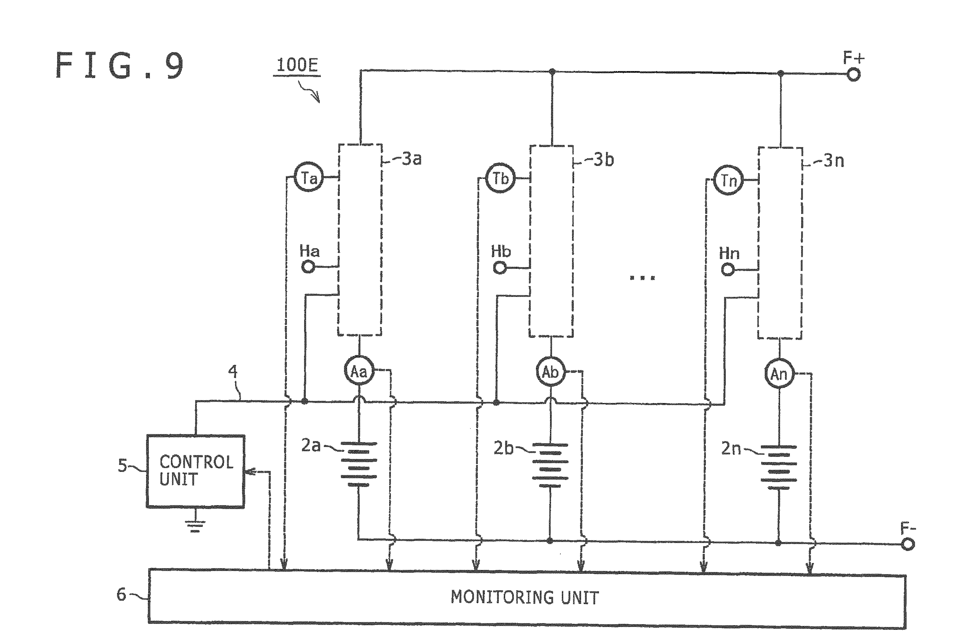

Fig. 9 is a circuit configuration diagram of a storage battery system in accordance with a sixth embodiment of the present invention. The storage battery system 100E of this embodiment differs from the storage battery system 100 of the first embodiment in that a monitoring unit 6 for monitoring the current, voltage or temperature of each current limiting device 3 is added. The other configuration is equivalent to that in the first embodiment and thus repeated explanation thereof is omitted for brevity.
The following explanation will be given of a case where the monitoring unit 6 monitors the temperature and the current of each current limiting device 3 and the control unit 5 controls the limit current value based on the temperature and the current.

As shown in Fig. 9, the storage battery system 100E comprises the storage battery units 2, the current limiting devices 3, temperature sensors Ta, Tb, ···, Tn, current sensors Aa, Ab, ···, An, the monitoring unit 6, and the control unit 5.
The storage battery units 2 and the current limiting devices 3 are equivalent to those in the storage battery system 100 of the first embodiment and thus repeated explanation thereof is omitted.

The temperature sensor Ta is installed in the current limiting device 3a. The temperature sensor Ta detects the temperature of the current limiting device 3a and outputs a signal representing the detected temperature to the monitoring unit 6. The other temperature sensors Tb, ···, Tn also operate in the same way.
The current sensor Aa is connected in series to the current limiting device 3a. The current sensor Aa detects the electric current flowing through the current limiting device 3a and outputs a signal representing the detected current to the monitoring unit 6. The other current sensors Ab, ···, An also operate in the same way.

The monitoring unit 6 includes electronic circuits (unshown) such as a CPU, a ROM, a RAM and various types of interfaces. The monitoring unit 6 outputs a limit current value decreasing command signal, a limit current value increasing command signal, or a current blocking command signal to the control unit 5 depending on the detected values inputted from the temperature sensor T and the current sensors A of each current limiting device 3.
The control unit 5 controls the gate voltage of each current limiting device 3 (i.e., the limit current value, see Fig. 3) depending on the aforementioned signal inputted from the monitoring unit 6.

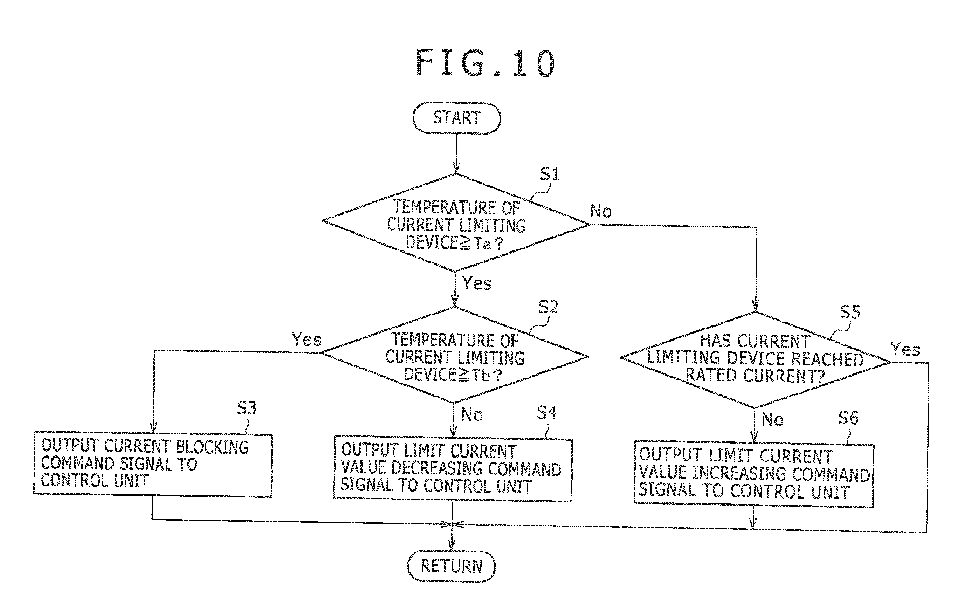

Fig. 10 is a flow chart showing the flow of the monitoring control executed by the storage battery system of the sixth embodiment.
In step S1, the monitoring unit 6 judges whether or not the temperature of each current limiting device 3 inputted from the temperature sensor T is a prescribed temperature Ta or higher. The prescribed temperature Ta is a preset temperature (e.g., 60 °C) as a temperature in cases where the charging/discharging of the storage battery unit 2 is in progress substantially at the rated current.
When the temperature of the current limiting device 3 is the prescribed temperature Ta or higher (step S1: Yes), the process of the monitoring unit 6 advances to step S2. When the temperature of the current limiting device 3 is less than the prescribed temperature Ta (step S1: No), the process of the monitoring unit 6 advances to step S5.

In the step S2, the monitoring unit 6 judges whether or not the temperature of the current limiting device 3 inputted from the terminal sensor T is a prescribed temperature Tb or higher. The prescribed temperature Tb is a preset temperature (e.g., 100 °C) as a threshold value for safe operation of the storage battery system 100E. When the temperature of the current limiting device 3 is the prescribed temperature Tb or higher (step S2: Yes), the process of the monitoring unit 6 advances to step S3. When the temperature of the current limiting device 3 is less than the prescribed temperature Tb (step S2: No), the process of the monitoring unit 6 advances to step S4.

In the step S3, the monitoring unit 6 outputs the current blocking command signal to the control unit 5 since the current limiting device 3 is operating at high temperatures above the safe temperature range.
When the current blocking signal is inputted from the monitoring unit 6, the control unit 5 operates the FETs 33 and 35 of the current limiting device 3 in the cut-off region (see Fig. 3), by which the charging/discharging current of the storage battery unit 2 is blocked.

In the step S4, the monitoring unit 6 outputs the limit current value decreasing command signal to the control unit 5. In other words, the monitoring unit 6 decreases the charging/discharging current of the storage battery unit 2 since the current limiting device 3 is operating in the safe temperature range but the temperature is relatively high (that is, since high electric current close to the rated current is flowing).
When the limit current value decreasing command signal is inputted from the monitoring unit 6, the control unit 5 decreases the gate voltage applied to the FETs 33 and 35 by a preset voltage (e.g., 25 mV). Then, according to the decrease in the gate voltage, the limit current value of the current limiting device 3 decreases (see Fig. 3).

In the step S5, the monitoring unit 6 judges whether the current limiting device 3 is operating at the rated current or not based on the electric current value inputted from the current sensor A. The value of the rated current has been prestored in storage means (unshown) of the monitoring unit 6.
When the current limiting device 3 is operating at the rated current (step S5: Yes), the process of the monitoring unit 6 returns to the step S1. When the current limiting device 3 is not operating at the rated current, that is, operating below the rated current (step S5: No), the process of the monitoring unit 6 advances to step S6.

In the step S6, the monitoring unit 6 outputs the limit current value increasing command signal to the control unit 5. This is because the value of the electric current flowing through the current limiting device 3 has not reached the rated current and no problem is caused by increasing the limit current value by a prescribed amount.
When the limit current value increasing command signal is inputted from the monitoring unit 6, the control unit 5 increases the gate voltage applied to the FETs 33 and 35 by a preset voltage (e.g., 25 mV). Then, according to the increase in the gate voltage, the limit current value of the current limiting device 3 increases (see Fig. 3).

### <Effect 6>

According to the storage battery system 100E of this embodiment, the control unit 5 operates the FETs 33 and 35 of a current limiting device 3 in the cut-off region when the temperature of the current limiting device 3 is high. Thus, the storage battery system 100E can be operated safely by interrupting the charging/discharging of a storage battery unit 2.
Further, by making the control unit 5 control the gate voltage of the FETs 33 and 35 of each current limiting device 3 based on the temperature and the current of each current limiting device 3 inputted from the monitoring unit 6, the maximum charging/discharging current of the whole system can be achieved within the safe operation range.

### <<Seventh Embodiment>>

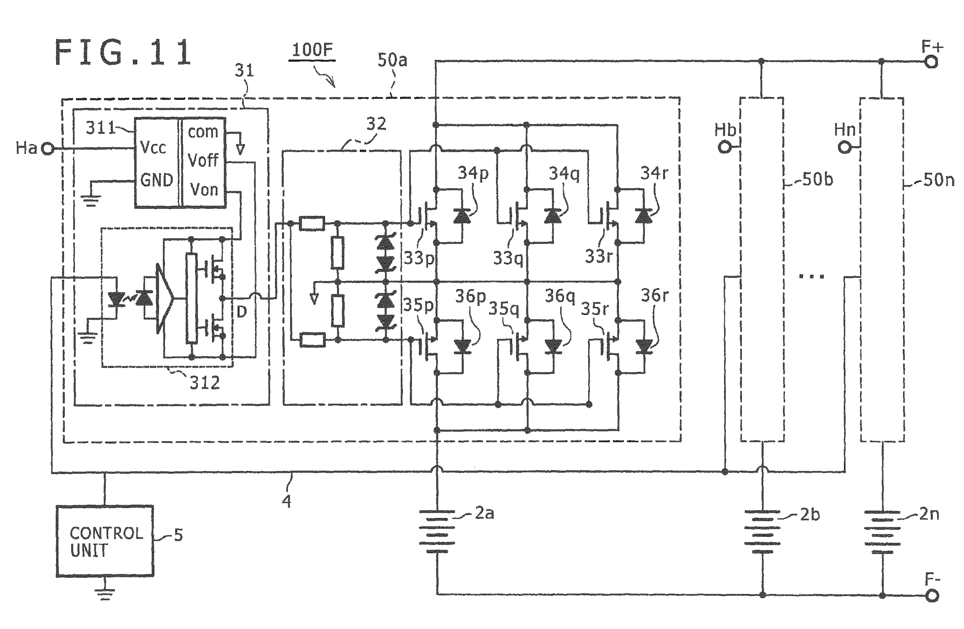

Fig. 11 is a circuit configuration diagram of a storage battery system in accordance with a seventh embodiment of the present invention. The storage battery system 100F of the seventh embodiment differs from the storage battery system 100 of the first embodiment in that each current limiting device 50 includes six FET-diode antiparallel connection units. The other configuration is equivalent to that in the storage battery system 100 of the first embodiment and thus repeated explanation thereof is omitted for brevity.

As shown in Fig. 11, in each current limiting device 50, an antiparallel device unit including an FET 33p and a diode 34p connected in antiparallel connection and an antiparallel device unit including an FET 35p and a diode 36p connected in antiparallel connection are connected together in series. FETs 33q and 35q and diodes 34q and 36q, and FETs 33r and 35r and diodes 34r and 36r are also connected in the same manner.
The three series-connected antiparallel device units are further connected together in parallel. Thus, there are three charging/discharging paths in the storage battery system 100F of this embodiment.

### <Effect 7>

An FET operating in the constant-current region generally heats up since the drain current flows in the state in which certain voltage is applied between the drain and the source. According to the storage battery system 100F of this embodiment, the charging/discharging current is separated by providing three charging/discharging paths by increasing the number of FETs, by which the heating due to the passage of the electric current can be distributed to the FETs.
Thus, by providing each current limiting device 50 with a plurality of charging/discharging paths, the charging/discharging current required of the storage battery system can be secured while suppressing the amount of heat emitted from each FET/diode.

### <<Eighth Embodiment>>

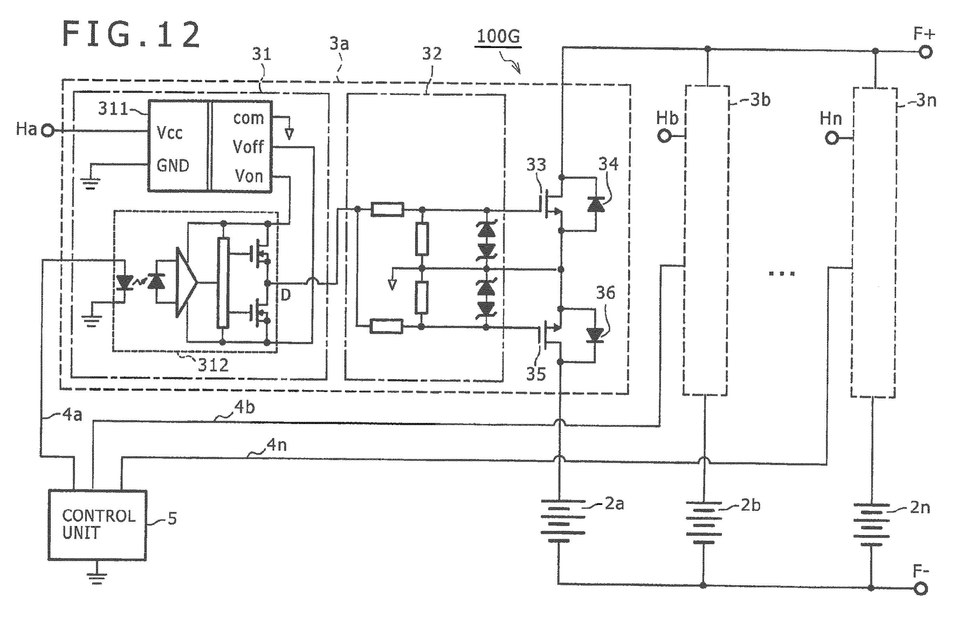

Fig. 12 is a circuit configuration diagram of a storage battery system in accordance with an eighth embodiment of the present invention. The storage battery system 100G of the eighth embodiment differs from the storage battery system 100 of the first embodiment in that the control unit 5 individually controls each current limiting device 3a, 3b, ···, 3n via wiring 4a, 4b, ···, 4n, respectively.
The other features are equivalent to those in the first embodiment and thus repeated explanation thereof is omitted for brevity.

As shown in Fig. 12, the control unit 5 is connected to the current limiting devices 3a, 3b, ···, 3n via the wirings 4a, 4b, ···, 4n, respectively. Specifically, the wiring 4a is connected to the input terminal of the photocoupler IC 312 of the voltage generating circuit 31 of a current limiting device 3 (ditto for the other wirings 4b, ···, 4n) .

### <Effect 8>

According to the storage battery system 100G of this embodiment, the charging/discharging current of a deteriorated storage battery unit 2 can be blocked by outputting the OFF signal individually to the current limiting device 3 corresponding to the deteriorated storage battery unit 2, for example. Meanwhile, the control unit 5 can continue outputting the ON signal to current limiting devices 3 corresponding to storage battery units 2 in the normal state.
Therefore, the maintenance/replacement of a specified storage battery unit 2 can be carried out while continuing the operation of the storage battery system 100G.

### <<Modification>>

While storage battery systems in accordance with the present invention have been explained above by describing several embodiments, embodiments in accordance with the present invention are not restricted to the above description; a variety of modifications, design changes, etc. are possible.
For example, while the current limiting device 3 in the above embodiments includes FETs as semiconductor devices, the semiconductor devices are not restricted to FETs. It is possible to implement the semiconductor devices of the current limiting device 3 by other types of semiconductor devices having the constant-current characteristic such as bipolar transistors and IGBTs (Insulated Gate Bipolar Transistors).

Further, a common external power supply terminal 28 for supplying the power supply voltage may be employed for all the current limiting devices 3 instead of individually equipping each current limiting device 3 with the external power supply terminal 28. The resistors R1, R2, R3 and R4 (see Fig. 4) for adjusting the gate voltages applied to the gates of the FETs 33 and 35 may also be implemented in a configuration that enables modification of their resistance values for each current limiting device 3.

The storage battery systems described in the above first through eighth embodiments may be combined properly. For example, it is possible to employ the current limiting device 3A shown in Fig. 5 or the current limiting device 3B shown in Fig. 6 for the storage battery system 100C shown in Fig. 7.

While the monitoring unit 6 in the storage battery system 100E described in the sixth embodiment outputs a prescribed signal to the control unit 5 based on the detected values inputted from the temperature sensor T and the current sensor A of each current limiting device 3, the operation of the monitoring unit 6 is not restricted to this example.
For example, it is possible to equip each current limiting device 3 with a temperature sensor T and no current sensor A. In this case, the monitoring unit 6 executes, for example, the steps S1 - S4 shown in Fig. 10 based on the detected value inputted from the temperature sensor T.

It is also possible to equip each current limiting device 3 with a current sensor A, a voltage sensor V and no temperature sensor T. Since the temperature of each current limiting device 3 is proportional to the electric power consumed by the current limiting device 3 (i.e., the product of the current and the voltage), the monitoring unit 6 may be configured to estimate the temperature of each current limiting device 3 based on the detected values inputted from the current sensor A and the voltage sensor V and execute control similarly to Fig. 10.
While each current limiting device 3 in the sixth embodiment is provided with a temperature sensor T or a current sensor A, the configuration of the storage battery system is not restricted to this example; it is also possible to provide each storage battery unit 2 with a temperature sensor T or a voltage sensor V.

While the storage battery unit 2 has been explained as a series connection of unit cells in the above first through eighth embodiments, the configuration of the storage battery unit 2 is not restricted to this example. For example, the storage battery unit may also be implemented by a parallel connection of unit cells, a parallel connection of series connection units each including a plurality of unit cells connected in series, etc.
While the control unit 5 performs the ON/OFF control of each current limiting device 3 in the above first through eighth embodiments, it is also possible to leave out the control unit 5 and make the voltage generating circuit 31 apply prescribed gate voltages to the FETs 33 and 35.

### Description of Reference Characters

- 100: storage battery system
- 1, 1a, 1b ···, 1n: storage battery module
- 2, 2a, 2b ···, 2n: storage battery unit
- 3, 3a, 3b ···, 3n: current limiting device (currentlimiting means)
- 31: voltage generating circuit (voltage application means)
- 311: DC/DC converter
- 312: photocoupler IC
- 32: overcurrent protection circuit (voltage application means)
- 33, 35: FET (semiconductor device)
- 34, 36: diode
- 4, 4a, 4b, 4c: wiring
- 5: control unit
- 50: control device
- 6: monitoring unit (monitoring means)
- T, Ta, ···, Tn: temperature sensor
- I, Ia, ···, In: current sensor
- V, Va, ···, Vn: voltage sensor

## Claims

1. A storage battery system comprising a parallel connection of a plurality of storage battery modules each including a storage battery unit having a plurality of unit cells and current limiting means connected in series to the storage battery unit, wherein the current limiting means includes:
a semiconductor device; and
voltage application means which applies prescribed voltage to the semiconductor device and thereby limits charging/discharging current of the storage battery unit via the semiconductor device within a limit current value corresponding to a constant-current region of the semiconductor device.

2. The storage battery system according to claim 1, wherein the semiconductor device includes an FET, a bipolar transistor or an IGBT.

3. The storage battery system according to claim 1, wherein:
the current limiting means comprises two antiparallel device units each including the semiconductor device and a diode connected in antiparallel connection, and
the antiparallel device units are connected together in series in inverse directions so that electric current can flow in both directions of the current limiting means.

4. The storage battery system according to claim 3, wherein the voltage application means applies voltages so that control terminals of the semiconductor devices of the antiparallel device units connected together in series in inverse directions are substantially equal in electric potential with respect to an intermediate point of the antiparallel device units.

5. The storage battery system according to claim 3, wherein the current limiting means comprises a device module in which a plurality of the antiparallel device units are connected in parallel.

6. The storage battery system according to claim 1, wherein:
the current limiting means comprises two series device units each including the semiconductor device and a diode connected in series in forward directions, and
the series device units are connected together in antiparallel connection so that electric current can flow in both directions of the current limiting means.

7. The storage battery system according to claim 1, comprising control means which controls each of the voltage application means and thereby controls the voltage applied from the voltage application means to the semiconductor device,
wherein the operating point of the semiconductor device corresponding to each voltage application means is switchable between a constant-current region and a cut-off region according to a control signal transmitted from the control means to each voltage application means.

8. The storage battery system according to claim 7, wherein the control means variably controls the limit current value by changing the voltage applied by the voltage application means to a control terminal of the semiconductor device.

9. The storage battery system according to claim 7, comprising monitoring means which monitors voltage applied to the current limiting means and current flowing through the current limiting means,
wherein the control means adjusts the limit current value of the current limiting means based on a voltage value and a current value inputted from the monitoring means.

10. The storage battery system according to claim 7, comprising monitoring means which monitors temperature of the current limiting means,
wherein the control means adjusts the limit current value of the current limiting means based on a temperature value inputted from the monitoring means.

11. The storage battery system according to claim 1, wherein wirings from the plurality of voltage application means are congregated into one common wiring and connected to the control means.

12. The storage battery system according to claim 1, wherein the control means and each of the voltage application means are connected together by individual wiring.
